# EUROPÄISCHE PATENTSCHRIFT

(11) **EP 0 682 722 B1**
(45) Veröffentlichungstag und Bekanntmachung des Hinweises auf die Patenterteilung: **28.01.1998**
(21) Anmeldenummer: 94901950.9
(22) Anmeldetag: 02.12.1993
(51) Int. Cl.: D05C 17/02, D06N 7/00, B29B 17/00

(54) **TUFTINGTEPPICH UND VERFAHREN ZU SEINER HERSTELLUNG**
TUFTING CARPET AND PROCESS FOR PRODUCING THE SAME
TAPIS TUFTE ET SON PROCEDE DE FABRICATION

(43) Veröffentlichungstag der Anmeldung: 22.11.1995
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9303393
(87) Internationale Veröffentlichungsnummer: WO9515411

(56) Entgegenhaltungen:
- WO-A-93/24698
- BE-A- 734 749
- DD-A- 280 290
- DE-A- 1 435 762
- DE-A- 4 217 438
- GB-A- 1 150 451
- US-A- 3 515 622
- US-A- 4 035 533

## Beschreibung

Die Erfindung betrifft einen Tuftingteppich gemäß dem Oberbegriff des Hauptanspruches und ein Verfahren zu seiner Herstellung.

Tuftingteppiche weisen einen Tuftingträger und in diesen eingetuftete Tuftingfäden auf, welche auf der Rückseite des Tuftingträgers Schlingen bilden (siehe z.B. BE-A-734 749). Bei einem fertigen Teppich werden die Schlingen entweder in dieser Form gelassen oder sie werden aufgeschnitten, so daß sie den Teppichflor bilden. Die Tuftingfäden werden in den Tuftingträger relativ locker eingetuftet und verlaufen abschnittsweise parallel zu der Ebene des Tuftingträgers. Damit die Tuftingfäden in dem Träger gehalten werden und sich aus diesem nicht herausziehen, muß ein solcher Teppich mit Latex behandelt werden. Latexbeschichtungsanlagen sind teuer, insbesondere schließt sich der eigentlichen Latexbeschichtung ein aufwendiger Trocknungsprozeß an. Sie erfordern Räume in der Größe von 8 m x 40 m. Bei einem Trocknungsprozeß entstehen Abluftprobleme. In manchen Fällen wird sogar der Vorgang des Eintuftens und die Beschichtung mit Latex entkoppelt, d.h. die getufteten Zwischenprodukte werden zu einer speziellen Beschichtungsanlage an einen anderen Ort gebracht. Dies ist nachteilig und verteuert den Herstellungsprozeß von derartigen Teppichen.

Aus der US PS 4705 706 ist ein Tuftingteppich bekannt, bei dem der Tuftingträger aus drei Trägerschichten besteht, um die Tuftingfäden fest zu verankern. Die feste Verbindung der eingetufteten Fäden mit dem Träger wird durch Erwärmen während des Herstellungsprozeßes erreicht. Damit das empfindliche Teppichmaterial durch die Hitzeeinwirkung nicht zerstört wird, sind die erwähnten Tuftingträgerschichten notwendig.

Aufgabe der vorliegenden Erfindung ist es, einen gattungsgemäßen Tuftingteppich so auszugestalten, daß bei seiner Herstellung kein Latex notwendig ist. Das Verfahren zur Herstellung eines solchen Teppiches soll unter Vermeidung der o.g. Nachteile preisgünstig und einfach sein.

Diese Aufgabe ist durch die im Hauptanspruch angegebene Erfindung gelöst. Das Verfahren zur Herstellung eines derartigen Teppiches ist in den Ansprüchen 9 bis 13 angegeben.

Der erfindungsgemäße Tuftingteppich besteht aus einem Tuftingträger, in dem die zunächst lose eingetufteten Tuftingfäden dadurch fest verankert sind, daß deren Rückenschenkel in eine rückseitig des Tuftingträgers angeordnete Schicht aus stückigem folienartigen Kunststoffmaterial,welches durch Druck und Temperatureinfluß klebrig gemacht wurde ,eingebunden sind. Die Tuftingfäden sind mit dem Tuftingträger so fest verbunden, daß die Zugabe von Latex nicht mehr notwendig ist und die Fäden ziehen sich aus dem fertigen Teppich nicht heraus. Die Rückenschenkel der Tuftingfäden werden durch die Verdichtung und / oder mindestens teilweises Schmelzen des Folienmaterials durch Druck- und Temperatureinfluß durch das Folienmaterial fest umschlossen; sie sind mit dem geschmolzenen bzw. durch Wärmeeinwirkung klebrigen Folienmaterial fest verbunden.

Soll eine noch festere Bindung der Tuftingfäden in dem Tuftingträger erreicht werden, so wird zusätzlich eine Bindeschicht. z.B. eine eingenadelte Faserbindeschicht, insbesondere mit Bindefasern aus Polyethylen von der Tuftseite her eingenadelt.Die Bindefaserschicht bildet ein vergrößertes Anbindevolumen gegen die Tuftingfäden von der Unterseite des Teppiches.

An der Rückseite des Tuftingträgers kann in einfacher Weise mittels der Kunststoffolienschicht ein Zweitrücken angebracht werden. Er wird auf die Kunststoffolienschicht aufgelegt und unter Druck- und Temperatureinfluß mit dem Tuftingträger durch das Schmelzen des Kunststoffmatrials verbunden. Der so angebrachte Zweitrücken trägt nicht nur zur besseren Befestigung und Verankerung der Rückenschenkel der Tuftingfäden bei, sondern es werden auch die Trittelastizität sowie Wärme- und Schalldämmungseigenschaften des Teppichs erhöht.

Vorteilhaft ist, wenn das stückige Folienmaterial uneben ist und aus Polyethylen besteht. Dadurch kann der ungebundene getuftete Tuftingträger durch Druck- und Temperatureinfluß, vorzugsweise durch Erwärmung über die Schmelztemperatur des Kunststoffs hinaus, so verdichtet werden, daß die Tuftingfäden in dem Kunststoffmaterial "miteingeschmolzen" vorliegen. Das Aufbringen eines unebenen, ein hohes Schüttvolumen aufweisenden Folienmaterials ist einfacher, als das Aufbringen einer Schicht aus flachen Folienstücken. Das verwendete Folienmaterial kann derart volumenvergrößert sein, daß es dreidimensional verformt vorliegt. Es können in an sich flachen Folien eine Vielzahl von über die Fläche verteilten Stellen so gereckt oder verformt sein, daß Erhebungen und Wölbungen entstehen. Vorteihaft ist es aber auch, daß bereits uneben vorliegende Streifen oder Stücke aus folienartigem Kunststoffmaterial miteingearbeitet werden können. Es können insbesondere auch Kunststoffabfallfolien verarbeitet werden. Da solche Folien miteinander und mit den Tuftingfäden durch Walzen oder Pressen, meistens bei erhöhter Temperatur verarbeitet werden, spielen deren unterschiedliche Eigenschaften, aufgrund von z.B. unterschiedlichen Materialien ,deren Dicke oder Farbe keine wesentliche Rolle. Wesentlich ist der Erweichungspunkt,d.h. die Temperstur bei der das Material klebrig und damit bindefähig wird. Z.B. bei eine Temperatur von 110 °C, d.h. leicht unterhalb der Polyethylen - Schmelztemperatur.Das als Abfall vorliegende Material kann in seiner bisherigen Ausgestaltung,beispielweise in seine bisherigen Farbigkeit aus Drucken oder Grundfarbe u.s.w. eingesetzt werden.

Desweiteren hat die Verwendung von volumenvergrößerten Folienstücken den Vorteil, daß sie in einfacher Weise unter Druck die Zwischenräume zwischen den Fadenreihen und auch die Räume um die Fadenschlaufe herum gut ausfüllen.

Das Verfahren zur Herstellung des erfindungsgemäßen Tuftingteppiches ist dadurch gekennzeichnet, daß zunächst auf der Rückseite eines lose getufteten Tuftingträgers stückiges folienartiges Kunststoffmaterial zu einer einheitlichen Schichtdicke, auch in mehreren Lagen, aufgebracht wird und durch Druck- und Temperatureinfluß, vorzugsweise mittels eines Warmwalz- bzw. Preßvorganges miteinander unter fester Einbindung der Rückenschenkel der Tuftingfäden verbunden.wird. Durch den Warmwalz- oder Preßvorgang wird nicht nur eine bessere Verbindung der Tuftingfäden mit dem Tuftingträger erreicht, sondern es ist auch möglich, Teppiche unterschiedlicher Steifigkeit und Dicke durch unterschiedlich hohe Verdichtung bzw. unterschiedlich dicke Schicht des folienartigen Materials herzustellen. Vorteilhaft dabei ist, wenn die Folien bis auf ihre Schmelztemperatur erwärmt werden, und die Rückenschenkel der Tuftingfäden mit dem Träger durch die schmelzenden Folien fest verbunden und in die Folien eingebunden werden. Die Wärmeeinwirkung erfolgt von der Rückseite des Teppiches, so daß eine zu starke Verformung des Teppichflores verhindert wird.

Die Menge der aufgebrachten Folienstücke kann entweder der Menge entsprechen , die für eine ausreichende Verklebung notwendig ist oder sie kann so bemessen sein, daß ein Überschuss entsteht , wodurch ein wesentlich schwereres und steiferes Produkt entsteht.Außerdem können die überschüssigen Folienstücke mit einem anderen Material vermischt werden, um Elastizität, Dicke, Rollbarbeit, Verlegbarkeit zu beeinflussen. Für eine bessere Verlegbarkeit kann der Rücken geprägt oder aufgerauht sein.

Außerdem kann es gemäß einer vorteilhaften Ausgestaltung nach Anspruch 12 vorgesehen sein, daß vor oder bei dem Walz- oder Preßvorgang ein zweiter Tuftingrücken auf den mit der Folienstückeschicht versehenen Tuftingträger gelegt und mit diesem durch die anschließende Druck- und Temperatureinwirkung verbunden wird. Der Zweitrücken kann aus Vliesstoff oder Gewebe bestehen.

Wenn normalerweise die Tuftingfäden gegenüber dem Träger nicht gebunden sind, wird die Bindung insbesondere für stark beanspruchte Teppiche dadurch verstärkt, daß vor dem Eintuften der Tuftingfäden der Tuftingrücken mit einer Schicht aus thermoplastischer Folie oder mit einer Klebeschicht versehen wird. Die Schicht aus thermoplastischer Folie kann z.B. Polyethylen sein und lose auf den Tuftingträger aufgelegt oder vorher mit ihm verbunden sein. Insbesondere durch Einnadeln einer Bindefaserschicht ist eine bessere Anbindung der Tuftingfäden an den Tuftingträger erreichbar. Die Verbindung der so beschaffenen Bindeschicht mit dem Träger geschieht insbesondere in einem einzigen Thermopreßprozeß, bei dem auch die Kunststoffolienstückeschicht unter Einbindung der Tuftingfäden auf den Träger aufgebracht wird.

Der erfindungsgemäße Gegenstand wird anhand von Zeichnungen näher erläutert.

Es zeigen:
- Fig. 1:: Eine schematische, vergräßerte Darstellung eines Tuftingträgers mit lose eingetufteten Fäden und mit einer Kunststoffolienstückeschicht.
- Fig. 2:: Eine schematische, vergrößerte Darstellung des erfindungsgemäßen Tuftingteppiches.
- Fig. 3:: Eine Darstellung gemäß der Fig. 1 mit einem Zweitrücken.
- Fig. 4:: Eine schematische, vergrößerte Darstellung eines Tuftingträgers mit lose eingetufteten Fäden und mit eingenadelten Bindefasern.

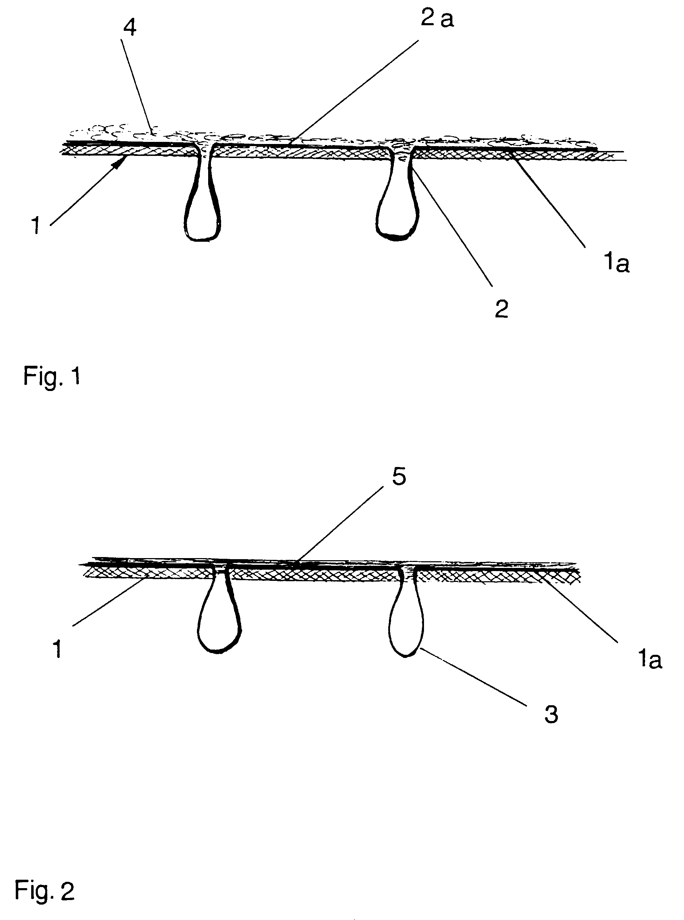

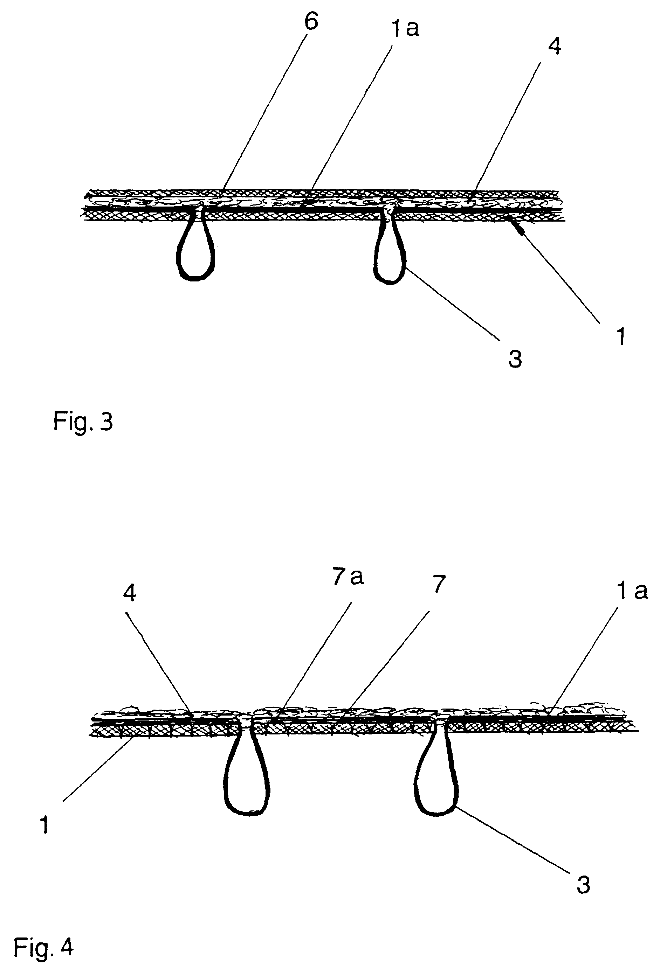

Der erfindungsgemäße Tuftingteppich weist einen Tuftingträger 1 mit zunächst lose eingetufteten Tuftingfäden 2 auf. Der Tuftingträger 1 besteht aus einem Gewebe oder Vliesstoff. Die Tuftingfäden 2 bilden nach dem Eintuften durch den Träger 1 Schlaufen 3 und auf der Rückseite la des Trägers 1 verlaufen sie parallel zu diesem unter Bildung der Rückenschenkel 2a. In Fig. 1 ist eine auf der Rückseite la des Tuftingträgers 1 abgelegte Schicht 4 aus losen Kunststoffolienstücken dargestellt. Diese Schicht 4 bildet unter Druck- und Temperatureinfluß, wobei die Temperatur im Bereich der Schmelztemperatur des verwendeten Kunststoffes liegt, jedoch diese meistens nicht erreicht, eine dünnere Schicht 5, wobei die Kunststoffolienstücke miteinander fest verbunden und zum Teil fest verklebt bzw. verschmolzen vorliegen. In dieser Schicht 5 sind die Rückenschenkel 2a der Tuftingfäden 2 fest eingebunden. Dadurch können sich die Tuftingfäden 2 aus dem fertigen Teppich (Fig. 2) nicht mehr herausziehen. In Fig. 3 ist ein Tuftingträger 1 mit der Kunststoffolienstückeschicht 4 und einem Zweitrücken 6 vor dem Thermopreßprozeß dargestellt. Durch Druck- und Temperatureinfluß, insbesondere in einem Warmwalz- oder Preßvorgang werden alle Bestandteile miteinander zu einem Teppichprodukt verbunden.

In Fig. 4 ist ein Tuftingträger 1 mit lose eingetufteten Tuftingfäden 2 und mit eingenadelten Bindefasern 7 dargestellt. Die Bindefasern 7 werden in den Tuftingträger 1 vor dem Eintuften der Fäden 2 eingenadelt. Sie bilden auf Ihren Abschnitten 7a auf der Rückseite 1a des Tuftingträgers 1 zusätzliches Anbindevolumen für die Rückenschenkel 2a der Tuftingfäden 2.

## Patentansprüche

1. Tuftingteppich, insbesondere Teppichboden mit in einem Tuftingträger eingetufteten und mit diesem verbundenen Tuftingfäden, **dadurch gekennzeichnet,** daß auf der Rückseite (1a) des Tuftingteppichs auf dem Tuftingträger eine aus unter Druck- und Temperatureinfluß miteinander verbundenen Stücken aus thermoplastischem stückigen Kunststoffolienmaterial bestehende Schicht (5), durch die die Rückenschenkel (2a) der Tuftingfäden (2) fest eingebunden sind, angeordnet ist.

2. Tuftingteppich nach Anspruch 1, **dadurch gekennzeichnet,** daß in den Tuftingträger (1) Bindefasern (7), insbesondere aus Polyethylen oder einem Material, dessen Schmelztemperatur niedriger ist als die der Tuftingfäden (2), eingenadelt sind.

3. Tuftingteppich nach Anspruch 1 oder 2, **dadurch gekennzeichnet,** daß das Kunststoffolienmaterial aus Polyethylenfolien besteht.

4. Tuftingteppich nach einem der vorangegangenen Ansprüche 1 bis 3, **dadurch gekennzeichnet**, daß die verwendeten Kunststoffolienstücke räumlich ausgebildet sind.

5. Tuftingteppich nach Anspruch 4, **dadurch gekennzeichnet,** daß das räumlich ausgebildete folienartige Material ein Schüttvolumen aufweist, das mindestens eineinhalb, maximal zehnmal so groß ist wie das Volumen des folienartigen ebenen Materials.

6. Tuftingteppich nach einem der vorangegangenen Ansprüche, **dadurch gekennzeichnet,** daß Kunststoffolienmaterial aus Folienabfällen besteht.

7. Tuftingteppich nach einem der vorangegangenen Ansprüche, **dadurch gekennzeichnet,** daß er einen Zweitrücken (6) aufweist.

8. Verfahren zur Herstellung eines Tuftingteppiches nach einem der vorhergegangenen Ansprüche, **dadurch gekennzeichnet,** daß auf die Rückseite (1a) eines mit Tuftingfäden (2) getufteten Tuftingträgers (1) gleichmäßig stückiges Kunststoffolienmaterial zu einer Schicht (4) aufgebracht wird und unter Druck- und Temperatureinwirkung unter fester Einbindung der Rückenschenkel (2a) der Tuftingfäden (2) mit diesen und untereinander verbunden wird.

9. Verfahren nach Anspruch 8, **dadurch gekennzeichnet,** daß die Temperatur- und Druckeinwirkung in einem Warmwalz- oder Preßvorgang vorgenommen wird.

10. Verfahren nach Anspruch 9 oder 10, **dadurch gekennzeichnet,** daß der Tuftingträger (1) mit Bindefasern (7), insbesondere Polyethylenbindefasern vor dem Tuftingvorgang vernadelt wird.

11. Verfahren nach Anspruch 9 oder 10, **dadurch gekennzeichnet**, daß der Tuftingrücken 1a) vor dem Tuftingprozeß mit einer klebfähigen Schicht versehen wird.

12. Verfahren nach einem der Ansprüche 9 bis 11, **dadurch gekennzeichnet,** daß auf die Schicht (4) aus stückigem thermoplastischem Kunststoffmaterial zusätzlich ein Zweitrücken (6) aufgebracht wird und durch einen gleichzeitigen oder anschließenden Warmwalz- oder Preßvorgang unter fester Einbindung der Rückenschenkel (2a) der Tuftingfäden (2) in die Kunststoffolienschicht (5) mit dieser verbunden wird.

## Claims

1. Tufted carpet, in particular a floor carpet, with tufting threads tufted into a tufting carrier and bonded to it, characterised in that there is arranged on the back face (1a) of the carpet on the tufting carrier a layer (5) comprising pieces of thermoplastic piece-like synthetic resin sheet material bonded together under the action of pressure and temperature and by which the return limbs (2a) of the tufting threads (2) are firmly bound in.

2. Tufted carpet according to claim 1, characterised in that binding fibres (7), in particular of polyethylene or a material of which the melting temperature is lower than that of the tufting threads (2), are needled into the tufting carrier (1).

3. Tufted carpet according to claim 1 or 2, characterised in that the plastics sheet material comprises polyethylene films.

4. Tufted carpets according to one of the foregoing claims 1 to 3, characterised in that the pieces of plastics sheet which are used are made of three-dimensional form.

5. Tufted carpet according to claim 4, characterised in that the three-dimensionally formed sheet-like material has a handling volume which is at least one and a half times and at most ten times as large as the volume of the flat sheet material.

6. Tufted carpet according to one of the foregoing claims characterised in that the plastics sheet material comprises scrap sheet.

7. Tufted carpet according to one of the foregoing claims, characterised in that it has a second backing (6).

8. Process for manufacturing a tufted carpet according to one of the foregoing claims, characterised in that pieces of plastics sheet material are applied uniformly to the back face (1a) of a tufting carrier (1) tufted with tufting threads (2) to form a layer (4) and under the action of pressure and temperature with firm binding-in of the return limbs (2a) of the tufting threads (2) they are bonded to these and to one another.

9. Process according to claim 8, characterised in that the action of temperature and pressure is performed in a hot rolling or pressing process.

10. Process according to claim 9 or 10, characterised in that the tufting carrier (1) is needled with binding fibres (7) in particular polyethylene binding fibres, before the tufting process.

11. Process according to claim 9 or 10, characterised in that the tufting backing (1a) is provided with an adherent layer before the tufting process.

12. Process according to one of claims 9 to 11, characterised in that a second backing (6) is applied in addition to the layer (4) of pieces of thermoplastic synthetic resin material and is connected to it by a simultaneous or subsequent hot rolling or pressing process with firm bonding-in of the return limbs (2a) of the tufting threads (2) into the plastics sheet layer (5).

## Revendications

1. Tapis tufté, en particulier moquette avec des fils de tufting tuftés dans un support de tufting et fixés à celui-ci, caractérisé en ce qu'une couche (5) composée de fragments soudés entre eux sous l'action de la température et de la pression d'un matériau thermoplastique en pellicule de plastique en fragments par laquelle les bouts postérieurs (2a) des fils de tufting (2) sont intégrés solidement est disposée sur la face postérieure (1a) du tapis de tufting sur le support de tufting.

2. Tapis tufté selon la revendication 1, caractérisé en ce que des fibres de liaison (7) en particulier en polyéthylène en ou en un matériau dont la température de fusion est inférieure à celle des fils de tufting (2) sont aiguilletées dans le support de tufting (1).

3. Tapis tufté selon la revendication 1 ou 2, caractérisé en ce que le matériau en pellicule de plastique se compose d'une pellicule de polyéthylène.

4. Tapis tufté selon l'une des revendications précédentes 1 à 3, caractérisé en ce que les fragments de pellicule de plastique utilisés sont de conception tridimensionnelle.

5. Tapis tufté selon la revendication 4, caractérisé en ce que le matériau en pellicule conçu tridimensionnellement présente un volume en vrac qui est au minimum une fois et demi et au maximum dix fois plus grand que le volume de la matière plane en forme de pellicule.

6. Tapis tufté selon l'une des revendications précédentes, caractérisé en ce que le matériau en pellicule de plastique se compose de déchets de pellicule.

7. Tapis tufté selon l'une des revendications précédentes, caractérisé en ce qu'il présente un deuxième dos (6).

8. Procédé de fabrication d'un tapis tufté selon l'une des revendications précédentes, caractérisé en ce qu'un matériau en pellicule de plastique en fragments est appliqué uniformément en une couche (4) sur la face postérieure (1a) d'un support de tufting (1) tufté avec des fils de tufting (2) et est fixé solidement sous l'action de la pression et de la température en intégrant solidement les bouts postérieurs (2a) des fils de tufting (2).

9. Procédé selon la revendication 8, caractérisé en ce que l'action de la température et de la pression est exercée dans un procédé de cylindrage à chaud ou de compression.

10. Procédé selon l'une des revendications 9 ou 10, caractérisé en ce que le support de tufting (1) est aiguilleté avec des fibres de liaison (7), en particulier des fibres de liaison en polyéthylène avant l'opération de tufting.

11. Procédé selon l'une des revendications 9 ou 10, caractérisé en ce que le dos de tufting (1a) est doté avant l'opération de tufting d'une couche collante.

12. Procédé selon l'une des revendications 9 à 11, caractérisé en ce qu'un deuxième dos (6) est appliqué en supplément sur la couche (4) composée d'un matériau thermoplastique de plastique en fragments et est fixé par une opération de cylindrage à chaud ou de compression consécutive ou simultanée en intégrant solidement les bouts postérieurs (2a) des fils de tufting (2) dans la couche en pellicule de plastique (5) avec celle-ci.
